Europäisches Patentamt

**(19)** European Patent Office

Office européen des brevets

**(11)** Publication number : **0 380 455 B1**

**(12)** # EUROPEAN PATENT SPECIFICATION

**(45)** Date of publication of patent specification :
**01.04.92 Bulletin 92/14**

**(51)** Int. Cl.⁵ : **B60H 1/00**

**(21)** Application number : **90830014.8**

**(22)** Date of filing : **16.01.90**

**(54)** A motor-vehicle air-conditioning system.

**(30)** Priority : **20.01.89 IT 6703089**

**(43)** Date of publication of application :
**01.08.90 Bulletin 90/31**

**(45)** Publication of the grant of the patent :
**01.04.92 Bulletin 92/14**

**(84)** Designated Contracting States :
**DE ES FR GB SE**

**(56)** References cited :
**FR-A- 2 238 105**
**FR-A- 2 480 685**
**GB-A- 2 095 819**
**PATENT ABSTRACTS OF JAPAN vol. 10, no. 270 (M-517)(2326) 13 September 1986, & JP-A-61 092909 (NIPPON DENSO K.K.) 10 May 1986,**

**(73)** Proprietor : **BORLETTI CLIMATIZZAZIONE S.r.l.**
**Frazione Masio, 24**
**I-10046 Poirino (Torino) (IT)**

**(72)** Inventor : **Del Monte, Franco**
**Via Principi d'Acaia 38**
**I-10138 Torino (IT)**

**(74)** Representative : **Buzzi, Franco et al**
**c/o Jacobacci-Casetta & Perani S.p.A. Via Alfieri, 17**
**I-10121 Torino (IT)**

EP 0 380 455 B1

## Description

The present invention relates to an air-conditioning system for motor vehicles, comprising a hollow support structure with apertures for the passage of air, an operating member which is supported for rotation by the structure, and at least one pair of shutters pivoted to the structure and operated by the operating member through respective transmission means.

In systems of the above type, each choking or closure shutter has a respective operative member. This makes the production of the system more complicated while at the same time leaving it to the user to achieve the air-flow distribution in the passenger compartment. This optimisation is not easy and often requires repeated manual operation of the operating levers of the system.

The object of the present invention is to provide an air-conditioning system of the type specified at the beginning of the description which does not have the above disadvantages and which also ensures the optimum distribution of the air flow without requiring particular attention by the user.

According to the invention, this object is achieved by virtue of the fact that the first shutter, which is adapted to close and/or choke a first aperture in the support structure, has a second aperture which is adapted to be closed and/or choked by a second shutter which is pivoted to the first shutter about a common articulation axis, the transmission means comprising a rod which is pivoted to the rotatable operating member and to the second shutter and which is provided with a device for connecting it to the first shutter, the device being adapted to operate when the operating member is in a predetermined angular position, and resilient means being interposed between the first and second shutters to keep the first shutter closed when the connecting device is in its inoperative condition.

By virtue of these characteristics, it is possible to adjust the positions of the two shutters according to a predetermined law by means of a single operating rod so as to ensure the optimum air-flow distribution in the various conditions of use (air being sent to the windscreen, outwards, downwards, etc.).

The connecting device preferably includes first and second levers which are pivoted to each other like a toggle, and to the rod and to the first shutter respectively, one of the levers having an abutment for preventing the relative pivoting of the levers beyond a predetermined angle.

Further characteristics and advantages of the air-conditioning system according to the invention will become clear from the detailed description which follows with reference to the appended drawings, provided by way of non-limiting example, in which:

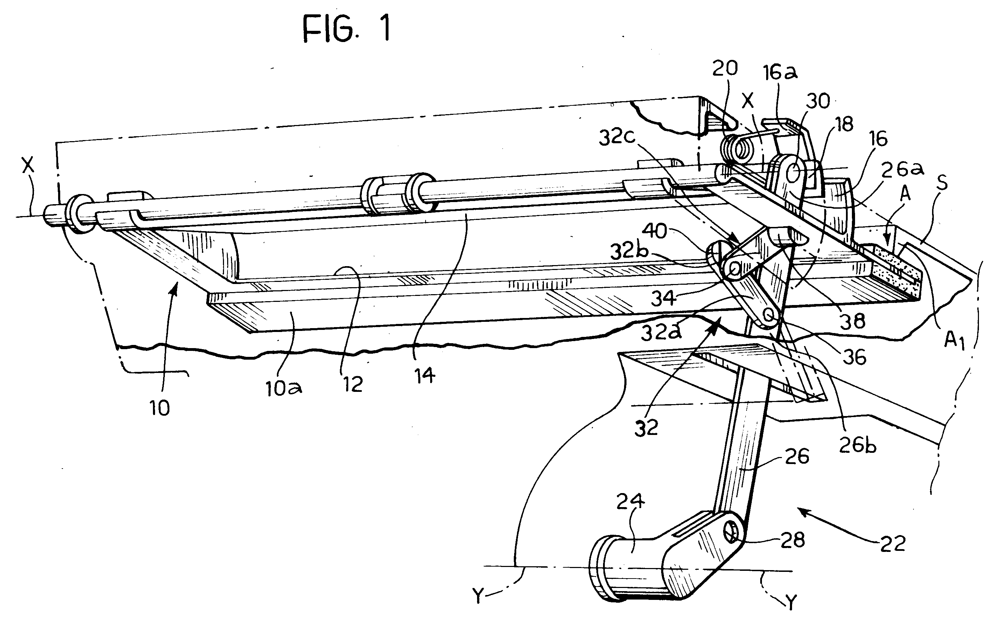

Figure 1 is a partially-sectioned, schematic perspective view of a portion of an air-conditioning system according to the invention,

Figures 2-5 are schematic side views of the portion of Figure 1 in four different operative configurations, and

Figure 6 is an exploded perspective view of a detail of Figure 1.

With reference to the drawings, the hollow structure of a motor-vehicle air-conditioning system indicated S has a substantially rectangular aperture A. A first shutter 10 for closing or choking the air flow through the aperture A is articulated to the structure S about a horizontal axis X-X and has an end edge 10a which is covered with elastomeric material in order to ensure optimal sealing with an edge $A_1$ of the aperture A.

The first shutter 10, which is rectangular in shape, has a rectangular aperture 12 for cooperating with a second shutter 14 which is articulated to the support structure S coaxially with the first shutter 10. The aperture 12 of the latter has a flange 16 on its edge opposite the articulation axis X-X, the flange having a circular cross-section with its centre of rotation situated on the axis X-X. The second shutter 14 has an auxiliary flange 18 on its edge opposite to the articulation axis X-X, the shape of the flange corresponding to that of the flange 16 of the first shutter 10 so that it can slide coaxially on the latter, ensuring sufficient air sealing. A pin spring 20, whose function will become clear from the following description, is interposed between the second shutter 14 and an abutment portion 16a of the flange 16.

An operating system, generally indicated 22, is provided for operating the first and second shutters 10 and 14 respectively. The system includes an operating member 24, which is articulated to the structure S about an axis Y-Y substantially parallel to the articulation axis X-X of the shutters, and a connecting rod 26 which is articulated at 28 to the operating member 24. The rod 26 has an end 26a articulated at 30 to the side of the second shutter 14. The rotation of the operation member 24 thus rotates the second shutter 14 directly about the axis X-X.

A toggle device 32, comprising a pair of levers 32a and 32b which are articulated to each other at 34, is interposed between the first shutter 10 and an intermediate portion 26b of the rod 26. The first lever 32a is also articulated at 36 to the intermediate portion 26b of the rod 26 whilst the second lever 32b is articulated at 38 to the first shutter 10 beside its rectangular aperture 12.

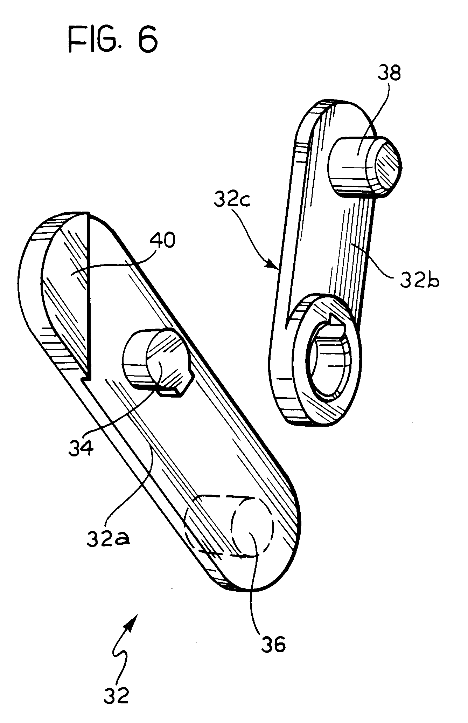

As can clearly be seen in Figure 6, the first lever 32a has an end abutment 40 for cooperating with an edge 32c of the second lever 32b in order to prevent the two levers of the toggle device 32 from pivoting beyond a predetermined angle.

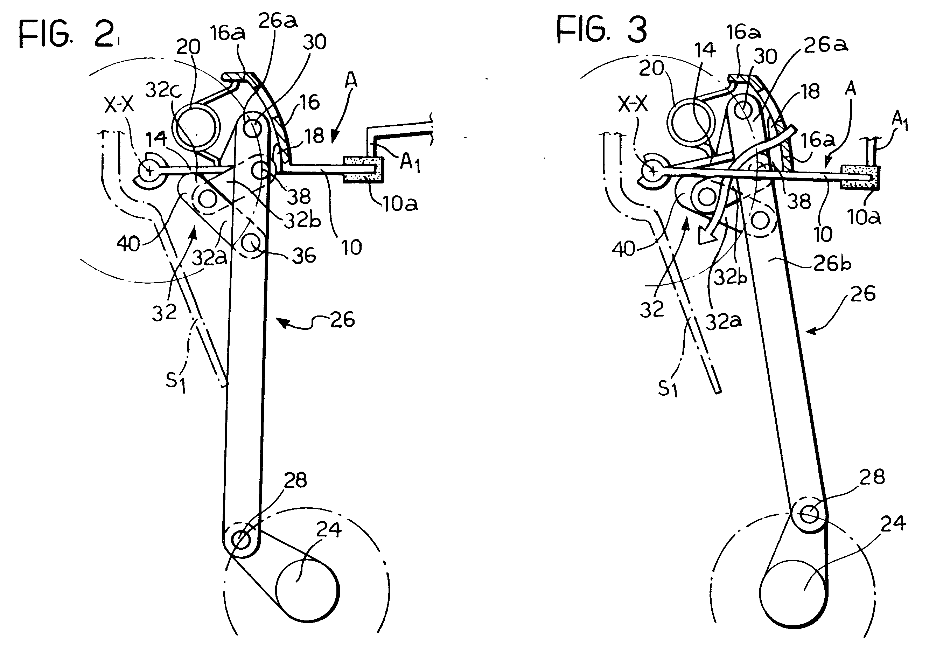

For a description of the operation of the air-conditioning system and, in particular, of the closure and/or choking achieved by means of the two shutters 10 and 14, reference is made to four different configurations of the operating system 22 (Figures 2-5), other intermediate configurations obviously being obtainable.

Figure 2 shows the configuration in which both of the shutters 10 and 14 are closed over the apertures A and 12. In this configuration, the first shutter 10 is kept closed by means of the force exerted by the spring 20 which, by cooperating with the second shutter 14 which is kept in position by the rod 26, urges the shutter 10 into abutment with the edge $A_1$ of the aperture A.

The clockwise rotation of the operating member 24 (with reference to Figures 2-5) causes the anticlockwise pivoting of the second shutter 14. This pivoting creates through-apertures beside the second shutter 14. In this configuration, the first shutter 10 is still urged against the edge $A_1$ of the aperture A by the spring 20.

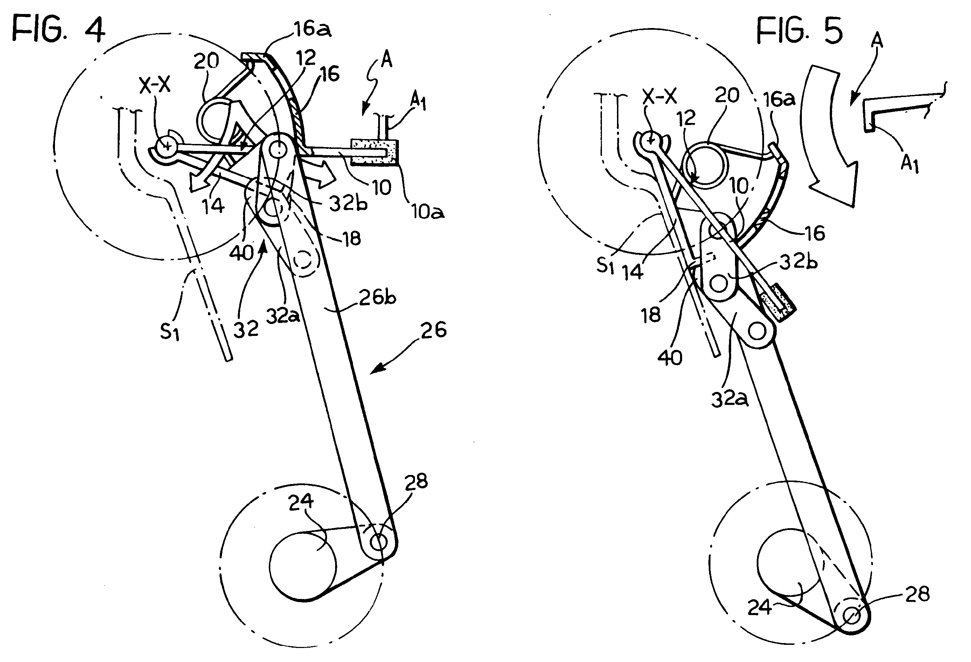

The further clockwise rotation of the operating member 24 leads to the configuration shown in Figure 4 in which the second shutter 14 is completely open and the second lever 32b of the toggle device 32 is brought to bear against the abutment 34 of the first lever 32a.

Yet further rotation of the operating member 24 causes the first shutter 10 to open since the levers of the toggle 32 enable the motion of the rod 26 to be transmitted to the shutter 10. During its pivoting, the shutter 10 entrains the second shutter 14 until this is brought to bear against an internal wall $S_1$ of the structure S (Figure 5), corresponding to a maximum air flow through the aperture A.

If the sense of rotation of the operating member 24 is reversed, the same configurations described above are obtained.

It is possible, by the suitable shaping of the edge of the auxiliary flange 18, to achieve a variable aperture of complex shape in correspondence with the edge of the aperture 12 so as to enable the air flow distribution to be balanced.

## Claims

1. An air-conditioning system for motor vehicles comprising a hollow support structure with apertures for the passage of air, an operating member supported for rotation by the structure, and at least one pair of shutters pivoted to the structure and operated by the operating member through respective transmission means, characterised in that a first shutter (10) of the pair of shutters (10, 14), which is adapted to close and/or choke a first aperture (A) in the support structure (S), has a second aperture (12) which is adapted to be closed and/or choked by a second shutter (14) which is pivoted to the first shutter (10) about a common articulation axis (X-X), the transmission means comprising a rod (26) which is pivoted to the rotatable operating member (24) and to the second shutter (14) and is provided with a device (32) for connecting it to the first shutter (10), which device (32) is adapted to operate when the operating member (24) is in a predetermined angular position, resilient means (20) being interposed between the first and second shutters (10, 14) to keep the first shutter (10) closed when the connecting device (32) is in its inoperative condition.

2. An air-conditioning system according to Claim 1, characterised in that the connecting device comprises first and second levers (32a, 32b) which are pivoted to each other like a toggle and to the rod (26) and to the first shutter (10) respectively, one of the levers having an abutment (40) for preventing the relative pivoting of the levers (32a, 32b) beyond a predetermined angle.

3. An air-conditioning system according to Claim 1, characterised in that the second aperture (12) has a lateral flange (16) arranged in an L-shape with the first shutter (10) and having a first circular section with its centre of rotation coincident with the articulation axis (X-X) of the shutters (13, 14), the flange (16) being arranged, in order to choke the air flow through the second aperture (12), to cooperate with an auxiliary flange (18) which projects laterally in an L-shape from an edge of the second shutter (14) and which has a shape corresponding to that of the flange (16) of the first shutter (10).

4. An air-conditioning system according to Claim 3, characterised in that the auxiliary flange (18) of the second shutter (14) has a shaped edge which is adapted to form an aperture of complex shape with the edge of the second aperture (12) in order to balance the air flows provided by the system.

5. An air-conditioning system according to Claim 3, characterised in that, when the operating member (24) is rotated, the two shutters (10, 14) successively and progressively assume the following configurations:

– first and second shutters (10, 14) closed so as to prevent the flow of air through the first and second apertures (A, 12),
– first shutter (10) closed and second shutter (14) partially open by virtue of the cooperation between the auxiliary flange (18) of the second shutter (14) and the flange (16) of the first shutter (10),
– first shutter (10) closed and second shutter (14) open, and
– first and second shutters (10, 14) completely open.

## Patentansprüche

1. Klimaanlage für Kraftfahrzeuge, welche eine hohle Tragkonstruktion mit Öffnungen für den Luftdurchgang, ein Bedienungsteil, welches durch die Konstruktion drehbar gelagert ist, und wenigstens ein Paar von Klappen aufweist, welche an der Konstruktion schwenkbar angebracht und mittels des Bedienungsteils über eine zugeordnete Übertragungseinrichtung betätigbar sind, dadurch **gekennzeichnet,** daß eine erste Klappe (10) des Paars von Klappen (10,14), welche zum Schließen und/oder Drosseln einer ersten Öffnung (A) in der Tragkonstruktion (S) bestimmt ist, eine zweite Öffnung (12) hat, welche derart ausgelegt ist, daß sie mittels einer zweiten Klappe (14) schließbar und-/ oder drosselbar ist, welche schwenkbeweglich an der ersten Klappe (10) um eine gemeinsame Gelenkachse (X-X) angebracht ist, daß die Übertragungseinrichtung eine Stange (26) aufweist, welche schwenkbeweglich an dem drehbaren Bedienungsteil (24) und an der zweiten Klappe (14) angeordnet ist und mit einer Einrichtung (32) zum Verbinden derselben mit der ersten Klappe (10) versehen ist, wobei die Einrichtung (32) derart ausgelegt ist, daß sie arbeitet, wenn das Bedienungsteil (24) in einer vorbestimmten Winkelposition ist, und daß Federeinrichtungen (20) zwischen den ersten und zweiten Klappen (10,14) angeordnet sind, um die erste Klappe (10) geschlossen zu halten, wenn die Verbindungseinrichtung (32) sich in ihrem unwirksamen Zustand befindet.

2. Klimaanlage nach Anspruch 1, dadurch gekennzeichnet, daß die Verbindungseinrichtung erste und zweite Hebel (32a, 32b) aufweist, welche schwenkbeweglich zueinander ähnlich einer Kniehebelanordnung und an der Stange (26)und an der ersten Klappe (10) jeweils angebracht sind, und daß einer der Hebel ein Widerlager (40) hat, welches eine Relativverschwenkung der Hebel (32a,32b) über einen vorbestimmten Winkel hinaus verhindert.

3. Klimaanlage nach Anspruch 1, dadurch gekennzeichnet, daß die zweite Öffnung (12) einen seitlichen Flansch (16) hat, welcher gemäß einer L-Gestalt zu der ersten Klappe (10) angeordnet ist und einen ersten, kreisförmigen Querschnitt hat, dessen Drehmittelpunkt mit der Gelenkachse (X-X) der Klappen (13,14) zusammenfällt, daß der Flansch (16) derart beschaffen und ausgelegt ist, daß zum Drosseln des Luftstroms durch die zweite Öffnung (12) dieser mit einem Hilfsflansch (18) zusammenarbeitet, welcher mit L-förmiger Gestalt seitlich von einem Rand der zweiten Klappe (14) vorsteht, und der eine Gestalt besitzt, welche jener des Flansches (16) der ersten Klappe (10) entspricht.

4. Klimaanlage nach Anspruch 3, dadurch gekennzeichnet, daß der Hilfsflansch (18) der zweiten Klappe (14) einen geformten Rand hat, welcher derart ausgelegt ist, daß er eine Öffnung mit einer komplexen Gestalt mit dem Rand der zweiten Öffnung (12) bildet, um die von der Anlage bereitgestellten Luftströme auszugleichen.

5. Klimaanlage nach Anspruch 3, dadurch gekennzeichnet, daß, wenn das Bedienungsteil (24) gedreht wird, die beiden Klappen (10,14) sukzessiv und progressiv die folgenden Anordnungen einnehmen:

– die ersten und zweiten Klappen (10,14) sind geschlossen, so daß ein Luftstrom durch die ersten und zweiten Öffnungen (A, 12) verhindert wird,

– die erste Klappe (10) ist geschlossen und die zweite Klappe (14) teilweise durch das Zusammenarbeiten zwischen dem Hilfsflansch (18) der zweiten Klappe (14) und dem Flansch (16) der ersten Klappe (10) offen,

– die erste Klappe (10) ist geschlossen und die zweite Klappe (14) ist offen, und

– die ersten und zweiten Klappen (10,14) sind vollständig offen.

**Revendications**

1. Système de conditionnement d'air pour véhicules automobiles comprenant une structure support creuse munie d'ouvertures pour le passage de l'air, un élément de commande monté rotatif sur la structure, et au moins deux obturateurs articulés sur la structure et commandés par l'élément de commande par l'intermédiaire de moyens de transmission respectifs, caractérisé en ce qu'un premier (10) des deux obturateurs (10, 14), qui est adapté pour fermer et/ou étrangler une première ouverture (A) de la structure support (S), possède une deuxième ouverture (12) qui est adaptée pour être fermée et/ou étranglée par un deuxième obturateur (14), lequel est articulé sur le premier obturateur (10) pour tourner autour d'un axe d'articulation commun (X-X), les moyens de transmission comprenant une bielle (26) qui est articulée sur l'élément de commande rotatif (24) et sur le deuxième obturateur (14) et qui est équipée d'un dispositif de liaison (32) servant à la relier au premier obturateur (10), lequel dispositif (32) est adapté pour travailler lorsque l'élément de commande (24) se trouve dans une position angulaire prédéterminée, et des moyens élastiques (20) étant interposés entre le premier obturateur (10) et le deuxième obturateur (14) pour maintenir le premier obturateur (10) fermé lorsque le dispositif de liaison (32) est dans son état inactif.

2. Système de conditionnement d'air selon la revendication 1, caractérisé en ce que le dispositif de liaison comprend une première biellette et une deuxième biellette (32a, 32b) qui sont articulées l'une sur l'autre à la façon d'une genouillère et articulées, l'une sur la bielle (26) et l'autre sur le premier obturateur (10), l'une des biellettes possédant une butée (40) qui empêche les biellettes (32a, 32b) de pivoter l'une par rapport à l'autre au-delà d'un angle prédéterminé.

3. Système de conditionnement d'air selon la revendication 1, caractérisé en ce que la deuxième ouverture (12) possède une aile latérale (16) qui forme une configuration en L avec le premier obturateur (10) et qui présente une première section circulaire dont le centre de rotation coïncide avec l'axe d'articulation (X-X) des obturateurs (13, 14), l'aile (16) étant agencée, en vue d'étrangler le flux d'air à travers la deuxième ouverture (12), pour coopérer avec une aile auxiliaire (18) qui fait saillie latéralement sur un bord du deuxième obturateur (14) avec une forme en L et qui possède une forme correspondant à celle de l'aile (16) du premier obturateur (10).

4. Système de conditionnement d'air selon la revendication 3, caractérisé en ce que l'aile auxiliaire (18) du deuxième obturateur (14) présente un bord profilé qui est adapté pour former une ouverture de forme complexe en combinaison avec le bord de la deuxième ouverture (12) afin d'équilibrer les flux d'air débités par le système.

5. Système de conditionnement d'air selon la revendication 3, caractérisé en ce que, lorsqu'on fait tourner l'élément de commande (24), les deux obturateurs (10, 14) prennent successivement et progressivement les configurations suivantes :

    – les premier et deuxième obturateurs (10, 14) sont fermés de manière à empêcher l'écoulement de l'air à travers les première et deuxième ouvertures (A, 12),

    – le premier obturateur (10) est fermé et le deuxième obturateur (14) est partiellement ouvert par suite de la coopération entre l'aile auxiliaire (18) du deuxième obturateur (14) et l'aile (16) du premier obturateur (10),

    – le premier obturateur (10) est fermé et le deuxième obturateur (14) est ouvert, et

    – les premier et deuxième obturateurs (10, 14) sont entièrement ouverts.

FIG. 1

FIG. 2

FIG. 3

EP 0 380 455 B1

FIG. 4

FIG. 5

EP 0 380 455 B1

# FIG. 6